# EUROPÄISCHE PATENTSCHRIFT

(11) **EP 3 372 087 B1**
(45) Veröffentlichungstag und Bekanntmachung des Hinweises auf die Patenterteilung: **30.10.2019**
(21) Anmeldenummer: 17160146.1
(22) Anmeldetag: 09.03.2017
(51) Int. Cl.: A22C 21/06

(54) **ENTWEIDEWERKZEUG UND ENTWEIDEVORRICHTUNG MIT EINEM SOLCHEN ENTWEIDEWERKZEUG**
EVISCERATING TOOL AND EVISCERATING DEVICE WITH SUCH AN EVISCERATING TOOL
OUTIL D'ÉVISCÉRATION ET DISPOSITIF D'ÉVISCÉRATION COMPRENANT UN TEL OUTIL D'ÉVISCÉRATION

(43) Veröffentlichungstag der Anmeldung: 12.09.2018
(73) Patentinhaber: Linco Food Systems A/S, 8380 Trige (DK)
(72) Erfinder: Andersen, Torben, 8585 Glesborg (DK)
(74) Vertreter: Stork Bamberger Patentanwälte PartmbB

(56) Entgegenhaltungen:
- EP-A1- 0 539 134
- EP-A1- 0 771 529
- WO-A1-2009/043348
- WO-A1-2016/013931

## Beschreibung

Die Erfindung betrifft ein Entweidewerkzeug, ausgebildet und eingerichtet zum Entfernen von Innereien und insbesondere eines Darmpakets aus dem Körper von geschlachtetem Geflügel, umfassend einen löffelförmigen Grundkörper, wobei der Grundkörper eine Löffelbasis und einen mindestens teilweise um die Löffelbasis umlaufenden Löffelrand zur Bildung einer Löffelmulde aufweist, wobei der Grundkörper mindestens teilweise aus einem elastischen Material hergestellt ist.

Des Weiteren betrifft die Erfindung eine Entweidevorrichtung, ausgebildet und eingerichtet zum Entfernen von Innereien und insbesondere eines Darmpaketes aus dem Körper von geschlachtetem Geflügel, umfassend eine Aufhängeeinrichtung zum Aufhängen von geköpftem Geflügel an Beinen oder Gelenken sowie mindestens eine Entweideeinrichtung, die mindestens ein Entweidewerkzeug trägt, wobei das Entweidewerkzeug aus einer Ausgangsposition außerhalb des Körpers in eine Arbeitsposition innerhalb des Körpers, in der das Entweidewerkzeug die Innereien und insbesondere das Darmpaket an der Brustseite oder der Rückenseite des Körpers umgibt, und zurück bewegbar ausgebildet ist.

Solche Entweidewerkzeuge und Entweidevorrichtungen kommen in der Tier und insbesondere in der Geflügel verarbeitenden Industrie zum Einsatz, um Innereien und insbesondere Darmpakete automatisch aus dem Geflügel zu entfernen. Ein Beispiel eines solchen Entweidewerkzeugs mit den Merkmalen des Oberbegriffes des Anspruchs 1 ist in der WO 2009/043348 zu finden. Dazu wird das geköpfte, also geschlachtete Geflügel an den Beinen oder Gelenken hängend in den Bereich einer Entweidevorrichtung transportiert. Die Entweidevorrichtung umfasst mindestens eine Entweideeinrichtung mit einem Entweidewerkzeug. Zum Entweiden wird das Entweidewerkzeug aus der Ausgangsposition in den Körper, vorzugsweise im Bereich des Anus, vorwärts und in Richtung des Halses eingeführt. Anschließend wird das Entweidewerkzeug vorzugsweise entlang des Brustbeins geführt und schließlich in Richtung des Rückens in eine vollständig vorgeschobene Position geschwenkt. In dieser Position umschließt das Entweidewerkzeug die Innereien brustseitig. Mit anderen Worten sind die Innereien auf der einen Seite durch die rückenseitige Innenwand der Bauchhöhle des Körpers und an den anderen Seiten, insbesondere auch brustseitig, vom Entweidewerkzeug umschlossen. Die Innereien sind also zwischen der rückenseitigen Innenwand und dem Entweidewerkzeug "eingeklemmt". Durch das Zurückziehen des Entweidewerkzeugs aus dem Körper in die Ausgangsposition werden die Innereien und insbesondere auch das Darmpaket aus dem Körper herausgezogen.

Der Grundkörper des Entweidewerkzeugs umfasst eine Löffelbasis. Die Löffelbasis kann eben sein oder bereits eine leichte Wölbung zur Bildung einer Mulde aufweisen. Des Weiteren umfasst der Grundkörper einen Löffelrand. Der Löffelrand umgibt die Löffelbasis teilweise oder vollständig umlaufend. Der Löffelrand setzt quasi die Löffelbasis seitlich fort und bildet als Seitenwand oder Flügel zusammen mit der Löffelbasis einen Aufnahmeraum für die Innereien. In der vollständig vorgeschobenen Position des Entweidewerkzeugs sind die Innereien somit zwischen dem Entweidewerkzeug und einer Innenwand des Körpers bzw. der Bauchhöhle "gefangen". Außenseitig und innenseitig weist der Grundkörper eine möglichst glatte Oberfläche auf, um die Bauchhöhle einerseits und die Innereien andererseits beim Einführen des Entweidewerkzeugs in die Bauchhöhle und Herausziehen aus der Bauchhöhle nicht zu beschädigen.

Um ein möglichst effizientes, also vollständiges Entfernen der Innereien zu gewährleisten, sollte das Entweidewerkzeug eine möglichst große und an die Innenkontur des Körpers angepasste Größe und Wirkfläche aufweisen. Die Größe der Tiere variiert jedoch. Je größer das Tier ist, desto größer kann die Eintrittsöffnung für das Entweidewerkzeug sein und desto weiter ist die Bauchhöhle und deren Innenkontur. Je kleiner das Tier ist, desto kleiner kann die Eintrittsöffnung für das Entweidewerkzeug sein und desto enger ist die Bauchhöhle und deren Innenkontur. Ist das Entweidewerkzeug zu klein für das zu verarbeitende Geflügel, kann dieses zwar beschädigungsfrei in den Körper eingeführt werden. Es führt jedoch dazu, dass die Innereien vom Entweidewerkzeug nicht oder nur teilweise umschlossen und entsprechend auch nur unvollständig aus dem Körper entfernt werden können. Ist das Entweidewerkzeug zu groß für das zu verarbeitende Geflügel bzw. für die Eintrittsöffnung und/oder die Bauchhöhle, besteht die Gefahr, dass durch das Entweidewerkzeug Knochen, beispielsweise Rippen, Kragenknochen, Gabelbein, Wirbelsäule oder dergleichen beschädigt oder sogar gebrochen werden. Entsprechend ist es notwendig, in Abhängigkeit der Größe des zu verarbeitenden Geflügels Entweidewerkzeuge unterschiedlicher Größe einzusetzen. Je nach Größe der zu verarbeitenden Tiere ist dann ein Werkzeugwechsel notwendig. Dieser Umrüstaufwand führt jedoch zu einem Zeitverlust und damit zu einer geringeren Leistungsfähigkeit der jeweiligen Entweidevorrichtung. Des Weiteren besteht das Problem, dass üblicherweise nur zwei Größen von Entweidewerkzeugen eingesetzt werden, um die Wechselfrequenz im Rahmen zu halten. Jedes dieser Entweidewerkzeuge deckt einen bestimmten Größenbereich ab. Das führt im Ergebnis jedoch zu unsauberen und qualitativ minderwertigen Entweidevorgängen.

Die EP 1 011 341 B1 beschreibt eine solche Entweidevorrichtung mit einem Entweidewerkzeug. Das in der EP-Schrift genannte Entweidewerkzeug ist vollständig aus einem harten und unnachgiebigen Material, nämlich z.B. Edelstahl hergestellt. Damit lassen sich nur Tiere einer bestimmten Größe entweiden. Durch die fehlende Flexibilität des Entweidewerkzeugs muss dieses je nach Größe des zu verarbeitenden Geflügels ausgetauscht werden. Die sich daraus ergebenden Nachteile wurden bereits weiter oben ausführlich beschrieben.

Der Erfindung liegt demnach die Aufgabe zugrunde, ein universell einsatzbares Entweidewerkzeug vorzuschlagen, das die Innereien und insbesondere das Darmpaket zuverlässig und vollständig aus geschlachtetem Geflügel unterschiedlicher Größe entfernt, ohne das Geflügel zu beschädigen.

Diese Aufgabe wird durch ein Entweidewerkzeug mit den eingangs genannten Merkmalen dadurch gelöst, dass das elastische Material einerseits flexibel genug ist, um sich beim Entfernen der Innereien einer Kontur des Körpers anzupassen und anderseits steif genug ist, um die Innereien aus dem Körper zu entfernen. Mit dem elastischen Material ist ein Material beschrieben, das sich bei einem definierten Druck verformen bzw. biegen lässt. Der Grundkörper kann im Bereich der Löffelbasis oder im Bereich des Löffelrandes teilweise oder ganz aus dem elastischen Material hergestellt sein. Durch das elastische Material lässt sich der Grundkörper partiell zusammendrücken oder biegen. Mit dieser erfindungsgemäßen Lösung wird ein Universal-Entweidewerkzeug bereitgestellt, mittels dem zum einen die Innereien von großem Geflügel vollständig und beschädigungsfrei aus dem Körper entfernt werden können und zum anderen die Innereien von kleinerem Geflügel vollständig und beschädigungsfrei aus dem Körper entfernt werden können. Durch das elastische Material im Bereich der Löffelbasis oder des Löffelrandes führt der Druck, der beim Einführen des Entweidewerkzeugs in den Körper und beim Führen des Entweidewerkzeugs innerhalb des Körpers durch den Körper auf das Entweidewerkzeug ausgeübt wird, dazu, dass das Entweidewerkzeug verformt wird und sich der Kontur des Körpers beim Eintauchen in den Körper und/oder innerhalb des Körpers anpasst. Mit anderen Worten stellt die Erfindung ein Einheitswerkzeug für große und kleine Tiere bereit, so dass einerseits auf einen Werkzeugwechsel verzichtet werden kann und andererseits große und kleine Tiere mit gleicher Qualität bearbeitet werden können.

Durch die erfindungsgemäße Ausbildung kann das Entweidewerkzeug an das größte zu verarbeitende Geflügel angepasst sein. Anders ausgedrückt kann das Entweidewerkzeug in seiner Ausgangsposition und unbelastet eine maximal große Wirkfläche aufweisen. Beim Einführen des Entweidewerkzeugs in den Körper oder beim Führen des Entweidewerkzeugs innerhalb des Körpers von großem Geflügel kann die Wirkfläche unverändert bleiben, um die Innereien vollständig aus dem Körper zu entfernen. Beim Einführen desselben Entweidewerkzeugs in den Körper oder beim Führen des Entweidewerkzeugs innerhalb des Körpers eines kleineren Geflügels ändert sich die Wirkfläche, sie verringert sich nämlich mit geringer werdender Größe des Geflügels, da der Körper selbst Druck auf das Entweidewerkzeug ausübt, der dazu führt, dass sich das Entweidewerkzeug verformt oder umbiegt. Damit werden einerseits Beschädigungen oder Brüche vermeiden und andererseits sichergestellt, dass die Innereien vollständig aus dem Körper entfernt werden.

Ein besonderer Vorteil wird durch die erfindungsgemäße Ausführung erreicht, indem sich das flexible Werkzeug stufenlos an unterschiedlich großes Geflügel anpasst. Mit anderen Worten ist die Wirkfläche für jedes Tier individuell angepasst, da der Körper jedes Tieres durch den auf das Entweidewerkzeug ausgeübten Druck direkten Einfluss auf die Größe und damit die Wirkfläche des Entweidewerkzeugs ausübt. Jedes Tier formt quasi das Entweidewerkzeug mit seinen Körpermaßen individuell, so dass es optimal und beschädigungsfrei entweidet werden kann.

Vorzugsweise ist der Grundkörper im Bereich des Löffelrandes mindestens teilweise aus dem elastischen Material hergestellt. Dadurch sind quasi flexible Flügel an den Seitenbereichen des Grundkörpers geschaffen, die einerseits ausreichend starr sind, um die Innereien vollständig zu umschließen und aus dem Körper zu führen, und andererseits so weich bzw. flexibel sind, dass sie von Widerständen, z.B. durch Knochen oder dergleichen, umgebogen werden, so dass sich das Entweidewerkzeug insbesondere bei Geflügel geringer Größe an die Innenkontur der Bauchhöhle anpasst, ohne die Knochen zu beschädigen oder gar zu brechen.

Vorteilhafterweise umfasst der Löffelrand zwei einander gegenüberliegende Seitenwangen, wobei die Seitenwangen mindestens teilweise aus dem elastischen Material hergestellt sind. Durch diese Ausführungsform kann die Wirkfläche des Grundkörpers besonders einfach und wirkungsvoll verändert werden.

In einer bevorzugten Weiterbildung der Erfindung weist die Löffelbasis eine Ausnehmung auf, wobei im Bereich der Ausnehmung ein Führungsmittel angeordnet ist, das relativ zur Löffelbasis bewegbar dieser zugeordnet ist. In einer Warteposition nimmt die Ausnehmung das Führungsmittel vorzugsweise vollständig auf, um eine ebene bzw. glatte Innen- und Außenfläche des Grundkörpers zu gewährleisten. Aus dieser Warteposition ist das Führungsmittel in eine Funktionsstellung schwenkbar, in der sich das freie Ende des Führungsmittels in einem Abstand zum Grundkörper befindet. Durch dieses Führungsmittel ist das Greifen und Halten der Innereien für ein vollständiges Entfernen optimiert.

Vorteilhafterweise schließt sich an die Löffelbasis ein Löffelhalter an, der zum Befestigen des Grundkörpers an einer Entweideeinrichtung ausgebildet und eingerichtet ist. Damit kann das Entweidewerkzeug zum Bestandteil einer maschinellen Entweidevorrichtung werden.

In einer bevorzugten Ausführungsform der Erfindung ist der Grundkörper aus mehreren Einzelteilen gebildet, wobei die Löffelbasis aus Edelstahl und der Löffelrand mindestens teilweise aus dem elastischen Material hergestellt ist. Die Einzelteile unterschiedlicher Materialien können zum Beispiel durch Vulkanisation oder andere geeignete Verbindungsverfahren miteinander verbunden werden. Auch eine mechanische Verbindung der Einzelteile ist möglich. Durch die harte und unnachgiebige Ausbildung der Löffelbasis können die zu entfernenden Innereien sicher gehalten und aus dem Körper geführt werden. Der mindestens teilweise elastische Löffelrand passt sich den jeweiligen Gegebenheiten des zu verarbeitenden Geflügelkörpers an. Damit wird ein effizientes und schonendes Entfernen der Innereien sichergestellt.

In einer anderen bevorzugten Weiterbildung der Erfindung ist der Grundkörper einteilig ausgebildet und vollständig aus dem elastischen Material hergestellt. Bei dieser Variante besteht der gesamte Grundkörper aus dem flexibel Material, wobei der so genannte "sweet point", also der Übergangsbereich zwischen ausreichender Steifigkeit einerseits, um das Entfernen der Innereien sicherzustellen, und ausreichender Flexibilität andererseits, um das Beschädigen oder Brechen von Knochen und dergleichen zu vermeiden, von der Größe und dem Größenbereich der zu verarbeitenden Tiere abhängt.

Vorteilhafterweise weist die Löffelbasis bei dem vollständig aus dem elastischen Material bestehenden Grundkörper eine größere Materialstärke auf als der Löffelrand. Durch die dickere Löffelbasis wird dem Grundkörper die notwendige Stabilität verliehen, um die Innereien sicher und vollständig zu entfernen. Der dünnere Löffelrand lässt sich leichter biegen, um einerseits das Einführen des Entweidewerkzeugs in den Körper zu erleichtern und andererseits eine optimale Anpassung an die Innenkontur der Bauchhöhle zu gewährleisten.

Vorteilhafterweise bestehen die Teile des Grundkörpers, die aus dem elastischen Material hergestellt sind, aus Polyurethane. Neben Polyurethane sind auch andere in der Nahrungsmittel verarbeitenden Industrie zugelassenen Kunststoffe einsetzbar. Mit diesem Material oder vergleichbaren Materialien, die lebensmittelecht sind, können die Erfordernisse von Flexibilität/Weichheit einerseits und Steifigkeit/Härte andererseits besonders gut erfüllt werden.

Besonders bevorzugt liegt die Härte des elastischen Materials in einem Bereich von 50 bis 140 Shore und bevorzugt in einem Bereich von 70 bis 100 Shore. Mit solchen Materialien und deren Härten ist der erwähnte "sweet point" zu erreichen.

Die Aufgabe wird auch durch eine Entweidevorrichtung mit den eingangs genannten Merkmalen dadurch gelöst, dass das oder jedes Entweidewerkzeug nach einem oder mehreren der Ansprüche 1 bis 10 ausgebildet ist. Die sich daraus ergebenden Vorteile wurden bereits im Zusammenhang mit dem Entweidewerkzeug beschrieben, weshalb zur Vermeidung von Wiederholungen auf die obigen Passagen verwiesen wird. Weitere zweckmäßige und/oder vorteilhafte Merkmale und Weiterbildungen zum Entweidewerkzeug sowie zu Entweidevorrichtung ergeben sich aus den Unteransprüchen und der Beschreibung. Besonders bevorzugte Ausführungsformen des Entweidewerkzeugs sowie der Entweidevorrichtung werden anhand der beigefügten Zeichnung näher erläutert. In der Zeichnung zeigt:
- Fig. 1: eine schematische Darstellung einer ersten Ausführungsform eines Entweidewerkzeugs in perspektivischer Ansicht,
- Fig. 2: eine schematische Darstellung einer weiteren Ausführungsform des Entweidewerkzeugs mit einem Führungsmittel in Seitenansicht,
- Fig. 3: eine schematische Darstellung einer weiteren Ausführungsform des Entweidewerkzeugs in Draufsicht, und

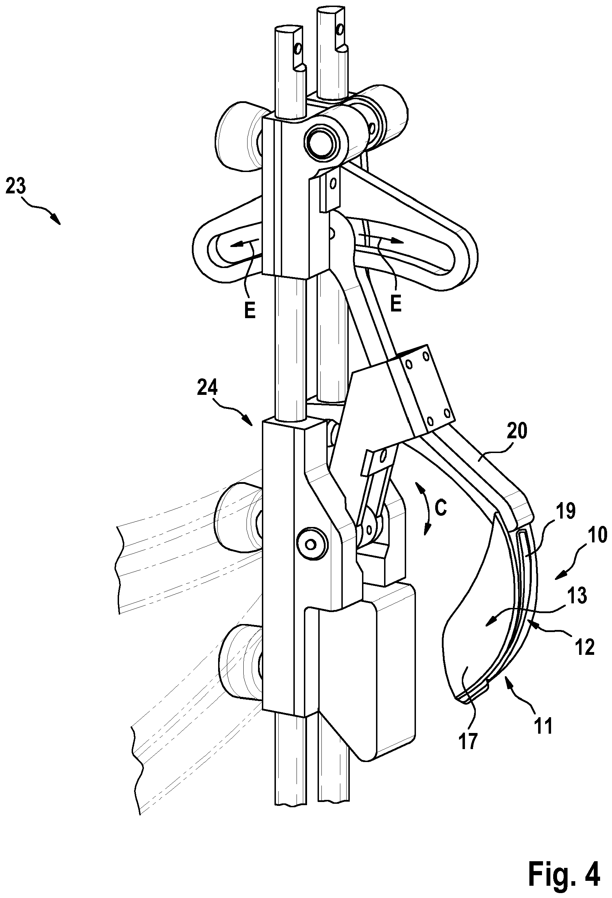

- Fig. 4: eine schematische Darstellung eines Ausschnitts einer Entweidevorrichtung mit einem Entweidewerkzeug.

Das in der Zeichnung dargestellte Entweidewerkzeug sowie die dargestellte Entweidevorrichtung dienen zum Entfernen von Innereien aus einem Geflügelkörper. Das Entweidewerkzeug und die Entweidevorrichtung können jedoch in gleicher Weise zum Entfernen von Innereien aus anderen Tierkörpern eingesetzt werden.

Das Entweidewerkzeug 10 ist zum Entfernen von Innereien und insbesondere eines Darmpakets aus dem Körper von geschlachtetem Geflügel ausgebildet und eingerichtet und umfasst einen löffelförmigen Grundkörper 11, wobei der Grundkörper 11 eine Löffelbasis 12 und einen mindestens teilweise um die Löffelbasis 12 umlaufenden Löffelrand 13 zur Bildung einer Löffelmulde 14 aufweist. Die Löffelbasis 12 kann eben ausgebildet sein. Bevorzugt weist die Löffelbasis 12 eine Wölbung auf, an die sich der Löffelrand 13 nahtlos anschließt und der die Löffelbasis 12 nach außen und nach oben verlängert, so dass eine Löffelmulde 14 größerer Tiefe entsteht. Die Dimension des Grundkörpers 11 bzw. dessen Abmessungen beschreiben die Wirkfläche des Entweidewerkzeugs 10.

Dieses Entweidewerkzeug 10 zeichnet sich erfindungsgemäß dadurch aus, dass der Grundkörper 11 mindestens teilweise aus einem elastischen Material hergestellt ist, wobei das elastische Material einerseits flexibel genug ist, um sich beim Entfernen der Innereien einer Kontur des Körpers anzupassen und anderseits steif genug ist, um die Innereien aus dem Körper zu entfernen.

Die im Folgenden beschriebenen Merkmale und Weiterbildungen stellen für sich betrachtet oder in Kombination miteinander bevorzugte Ausführungsformen dar. Es wird ausdrücklich darauf hingewiesen, dass Merkmale, die in den Ansprüchen und/oder der Beschreibung und/oder der Zeichnung zusammengefasst oder in einer gemeinsamen Ausführungsform beschrieben sind, auch funktional eigenständig das weiter oben beschriebene Entweidewerkzeug 10 weiterbilden können.

Das Entweidewerkzeug 10 kann im Bereich der Löffelbasis 12 und/oder im Bereich des Löffelrandes 13 ganz oder teilweise aus elastischem Material hergestellt sein. In nicht dargestellten Ausführungsformen kann z.B. im Bereich der Löffelbasis12 ein vorzugsweise mittig angeordneter Streifen aus elastischen bzw. flexiblem Material ausgebildet sein bzw. bestehen. Dieser sich z.B. in Längsrichtung L der Löffelbasis 12 erstreckende Streifen aus dem weichen Material kann z.B. eine Soll-Knickstelle bilden, derart, dass die beiden Grundkörperhälften bei von außen wirkender Belastung, beispielsweise ausgelöst durch den Körper des Geflügels beim Einführen des Entweidewerkzeugs 10 in den Körper, zusammengedrückt werden. Damit wird der Grundkörper 11 schmaler und weist eine reduzierte Wirkfläche auf.

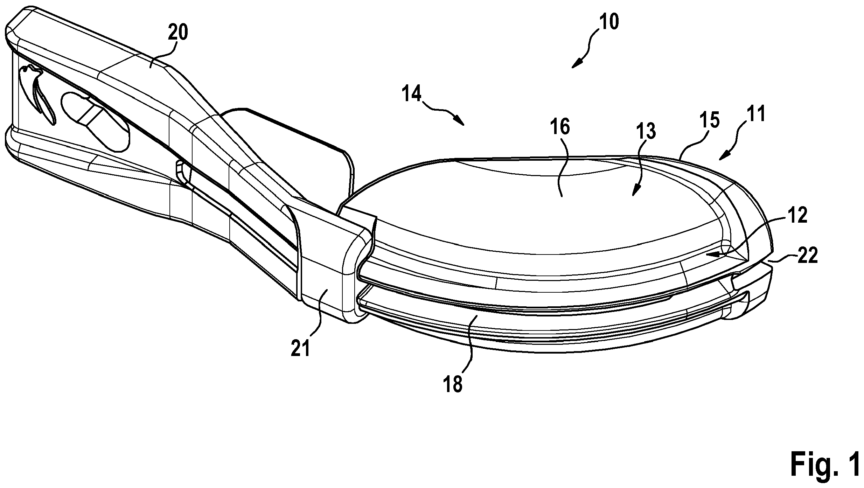

Besonders bevorzugt ist der Grundkörper 11 im Bereich des Löffelrandes 13 mindestens teilweise aus dem elastischen Material hergestellt. Der Löffelrand 13 erstreckt sich ausgehend von der Löffelbasis 12 nach oben und außen bis zu einer freien Kante 15. Vorteilhafterweise ist mindestens der obere Bereich der freien Kante 15 aus dem elastischen Material hergestellt. In anderen Ausführungsformen kann auch der gesamte Löffelrand 13 aus dem elastischen Material hergestellt sein. Der Löffelrand 13 kann sich vollständig umlaufend um die Löffelbasis 12 erstrecken. Der Löffelrand 13 kann aber auch Unterbrechungen in seinem Umlauf aufweisen. In den Ausführungsformen der Figuren 1 bis 3 umfasst der Löffelrand 13 zwei einander gegenüberliegende Seitenwangen 16, 17, wobei die Seitenwangen 16, 17 mindestens teilweise aus dem elastischen Material hergestellt sind. Optional kann auch nur eine der Seitenwangen 16 oder 17 aus dem elastischen Material hergestellt sein.

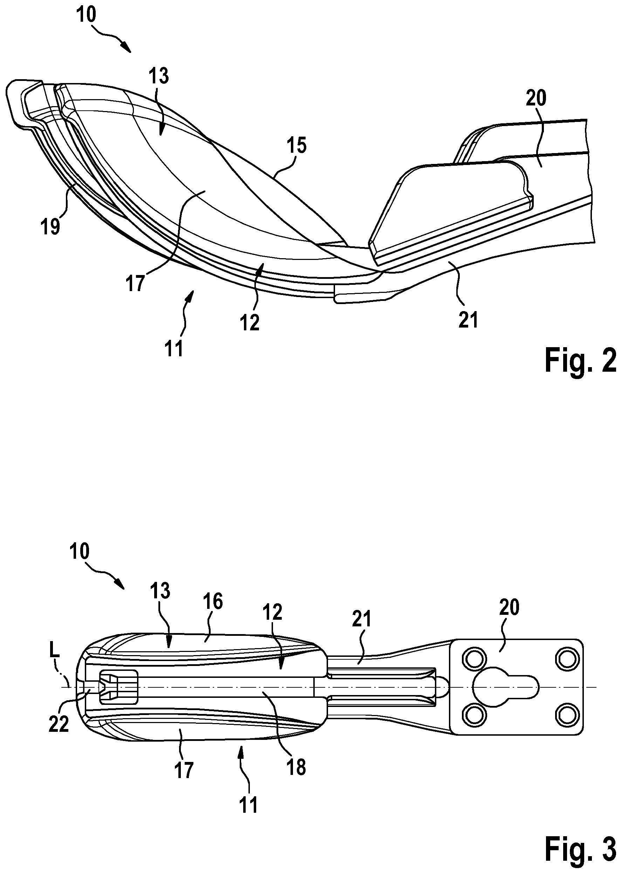

In einer bevorzugten Weiterbildung des Entweidewerkzeugs 10 weist die Löffelbasis 12 eine Ausnehmung 18 auf, wobei im Bereich der Ausnehmung 18 ein Führungsmittel 19 angeordnet ist, das relativ zur Löffelbasis 12 bewegbar dieser zugeordnet ist. Die Ausnehmung erstreckt sich vorzugsweise über mindestens einen Teil der gesamten Länge der Löffelbasis 12 parallel zur Längserstreckung L (siehe insbesondere Figur 3). Die Ausnehmung 18 kann auf der Außenseite der Löffelbasis 12 als Vertiefung oder auch auf der Innenseite der Löffelbasis 12 als Vertiefung ausgebildet sein. Die Ausnehmung 18 kann aber auch als Durchbruch vorgesehen sein. Optional ist dieser Ausnehmung 18 das Führungsmittel 19 zugeordnet. Das Führungsmittel 19, vorzugsweise ein der Wölbung der Löffelbasis 12 angepasster Stab aus Edelstahl oder dergleichen, ist schwenkbar an der Löffelbasis 12 angeordnet. Das Führungsmittel 19 kann auch schwenkbar an einem Löffelhalter 20, der sich an die Löffelbasis 12 anschließen kann, gelagert sein. Der Löffelhalter 20 ist zum Befestigen des Grundkörpers 11 an einer Entweideeinrichtung ausgebildet und eingerichtet.

Besonders bevorzugt ist das Führungsmittel 19 im Übergangsbereich vom Löffelhalter 20 zur Löffelbasis 12, also im Bereich eines Schaftes 21, schwenkbar gelagert. Die Ausnehmung 18 erstreckt sich ausgehend vom Schaft 21 in Richtung des freien Endes des Grundkörpers 11 und endet mit einem Abstand zum freien Ende. Am freien Ende des Grundkörpers 11 ist ein Einschnitt 22 vorgesehen. In einer ersten Position des Führungsmittels 19, in der das Führungsmittel 19 in der Ausnehmung 18 liegt, schließt das freie Ende des Führungsmittels 19 diesen Einschnitt 22. In einer zweiten Position des Führungsmittels 19, in der das Führungsmittel 19 aus der Ausnehmung 18 heraus geschwenkt ist, bildet der Einschnitt 22 eine Öffnung, die zur Aufnahme der Luft-/Speiseröhre (als Bestandteil der Innereien) der zu verarbeitenden Tiere ausgebildet und eingerichtet ist.

Der Grundkörper 11 kann in einer Ausführungsform aus mehreren Einzelteilen gebildet sein. In einer solchen Ausführung ist die Löffelbasis 12 bevorzugt aus Edelstahl und der Löffelrand 13 mindestens teilweise aus dem elastischen Material hergestellt. Selbstverständlich sind andere Materialkombinationen von Materialien, die in der Nahrungsmittel verarbeitenden Industrie zugelassen sind, möglich. Der Löffelhalter 20 ist vorzugsweise ebenfalls aus Edelstahl oder dergleichen hergestellt. Der Löffelhalter 20 ist fest mit der Löffelbasis 12 verbunden. Die in den Ausführungsformen der Figuren 1 bis 3 aus elastischem Material bestehenden Seitenwangen 16, 17 sind wahlweise aufgesteckt, in Führungsschlitze eingelassen oder besonders bevorzugt mittels Vulkanisation mit der Löffelbasis 12 verbunden. Andere Verbindungen zwischen dem Löffelrand 13 und der Löffelbasis 12 sind ebenfalls möglich.

In weiteren Ausführungsformen kann der Grundkörper 11 einteilig ausgebildet sein. Ein solcher einteiliger Grundkörper 11 ist dann vollständig aus dem elastischen Material hergestellt. Der Grundkörper 11 kann einheitlich und durchgängig aus einem Material einer einzigen Härte bestehen. Der Grundkörper 11 kann aber auch aus einem Material bestehen, dass in unterschiedlichen Bereichen, beispielsweise Löffelbasis 12 einerseits und Löffelrand 13 andererseits, unterschiedliche Härten aufweist. Die Materialwahl und die Härte des Materials hängen - um den bereits erwähnten "sweet point" zu finden - von der Größe der zu verarbeitenden Tiere ab. Optional können auch die Materialstärken von Löffelbasis 12 und Löffelrand 13 variieren. Bevorzugt weist die Löffelbasis 12 eine größere Materialstärke auf als der Löffelrand 13.

Als elastisches Material kann bevorzugt Polyurethane (kurz PU) eingesetzt werden. Selbstverständlich sind auch andere Kunststoffe, die in der Nahrungsmittel verarbeitenden Industrie zugelassen sind und vergleichbare Materialeigenschaften aufweisen, einsetzbar. Es ist grundsätzlich auch möglich, biegsame Metalle oder Bleche als elastisches Material einzusetzen. Die Härte des elastischen Materials liegt bevorzugt in einem Bereich von 50 bis 140 Shore und besonders bevorzugt in einem Bereich von 70 bis 100 Shore. Je nach und vor allem in Abhängigkeit der Größe der zu verarbeitenden Tiere können die Härte-Werte auch unterhalb oder oberhalb der genannten Bereich liegen.

Das Entweidewerkzeug 10 kann als Einzelteil, Austauschteil oder Ersatzteil eingesetzt werden. Bevorzugt ist das Entweidewerkzeug 10 Bestandteil einer Entweidevorrichtung 23. Diese Entweidevorrichtung 23 ist zum Entfernen von Innereien und insbesondere eines Darmpaketen aus dem Körper von geschlachtetem Geflügel ausgebildet und eingerichtet und umfasst eine Aufhängeeinrichtung zum Aufhängen von geköpftem Geflügel an Beinen oder Gelenken sowie mindestens eine Entweideeinrichtung, die mindestens ein Entweidewerkzeug 10 trägt, wobei das Entweidewerkzeug 10 aus einer Ausgangsposition außerhalb des Körpers in eine Arbeitsposition innerhalb des Körpers, in der das Entweidewerkzeug die Innereien und insbesondere das Darmpaket an der Brustseite oder der Rückenseite des Körpers umgibt, und zurück bewegbar ausgebildet ist. Erfindungsgemäß ist das Entweidewerkzeug 10 nach einem oder mehreren der Ansprüche 1 bis 10 ausgebildet.

Vorzugsweise umfasst die Entweidevorrichtung 23 mehrere Entweideeinrichtungen 24, von denen jede ein Entweidewerkzeug 10 aufweist. Solche bekannten Entweidevorrichtungen 23 sind z.B. in der EP 2 185 000 B1 beschrieben, deren Inhalt bezüglich des Aufbaus solcher Entweidevorrichtungen 23 und deren Funktionsweise hiermit zum Inhalt dieser Anmeldung gemacht wird.

Im Folgenden wird das Entfernen von Innereien mittels eines Entweidewerkzeugs 10 für unterschiedlich große Tiere bezüglich der flexiblen Anpassung des Entweidewerkzeugs 10 näher beschrieben.
Bei der Verarbeitung eines größeren Tieres wird das Entweidewerkzeug 10 vorwärts und in Richtung des Halses zu- und eingeführt. Vorzugsweise taucht das Entweidewerkzeug 10 im Bereich des Anus in das Kopf nach unten hängende Geflügel ein. Das Entweidewerkzeug 10 weist dabei seine maximale Wirkfläche auf. Innerhalb des Körpers bzw. der Bauchhöhle wird das Entweidewerkzeug 10 bevorzugt zunächst in Richtung des Brustbeins und dann entlang des Brustbeins von oben nach unten in Richtung der Speiseröhre und Luftröhre bewegt und anschließend vom Brustbein weg in Richtung des Rückens in eine vollständig vorgeschobene Position geschwenkt. In dieser Position umschließt das Entweidewerkzeug 10 die "eingesammelten" Innereien vollständig in der Löffelmulde 14 und drückt sie gegen die Innenwand der Bauchhöhle auf der Rückenseite. Dadurch sind die Innereien zwischen der Innenwand der Bauchhöhle und dem Entweidewerkzeug 10 umschlossen. In dieser Position wird das Entweidewerkzeug 10 aus der Bauchhöhle herausgeführt, wodurch die Innereien ebenfalls aus der Bauchhöhle und damit dem Körper herausgezogen werden.

Folgt nun das Entweiden eines kleineren Tieres, wird dasselbe Entweidewerkzeug 10 vorwärts und in einer Bewegung in Richtung des Halses in den Körper des Geflügels zu- und eingeführt. Vorzugsweise taucht das Entweidewerkzeug 10 im Bereich des Anus in das Kopf nach unten hängende Geflügel ein. Sollte der Zugang zur Bauchhöhle enger sein als das Entweidewerkzeug 10 mit seiner maximalen Wirkfläche, wird das Entweidewerkzeug 10 durch die Kontur des Körpers in eine passende Form gebracht, unter Verringerung der Wirkfläche. Einfach ausgedrückt wird das Entweidewerkzeug 10 z.B. im Bereich des Anus beim Eintauchen im Bereich der Löffelbasis 12 oder bevorzugt im Bereich des Löffelrandes 13 zusammengedrückt, so dass das Entweidewerkzeug 10 in seinen äußeren Abmessungen kleiner wird und der Zugang beschädigungsfrei erfolgen kann. Innerhalb der Bauchhöhle passt sich das Entweidewerkzeug 10 beim Führen bevorzugt entlang des Brustbeins durch das elastische Material mindestens von Teilen des Grundkörpers 11 der Innenkontur des zu verarbeitenden Geflügels an. Anders ausgedrückt wird vorzugsweise der Löffelrand 13 durch die Innenkontur der Bauchhöhle in die passende Form gedrückt, so dass die zum "Sammeln" der Eingeweide notwendigen Bewegungen innerhalb der Bauchhöhle beschädigungsfrei erfolgen. Beim abschließenden Herausziehen des Entweidewerkzeugs 10 wird das Entweidewerkzeug 10 entsprechend dem Eintauchen verformt.

Auf einen Wechsel des Entweidewerkzeugs 10 kann durch die erfindungsgemäße Ausbildung des Entweidewerkzeugs 10 verzichtet werden. Mit einer einzigen Werkzeuggröße kann Geflügel unterschiedlicher Größenbereiche beschädigungsfrei entweidet werden, wobei die Innereien jeweils vollständig und zuverlässig aus dem Körper gezogen werden.

## Patentansprüche

1. Entweidewerkzeug (10), ausgebildet und eingerichtet zum Entfernen von Innereien und insbesondere eines Darmpakets aus dem Körper von geschlachtetem Geflügel, umfassend einen löffelförmigen Grundkörper (11), wobei der Grundkörper (11) eine Löffelbasis (12) und einen mindestens teilweise um die Löffelbasis (12) umlaufenden Löffelrand (13) zur Bildung einer Löffelmulde (14) aufweist, wobei der Grundkörper (11) mindestens teilweise aus einem elastischen Material hergestellt ist, **dadurch gekennzeichnet, dass** das elastische Material einerseits flexibel genug ist, um sich beim Entfernen der Innereien einer Kontur des Körpers anzupassen und anderseits steif genug ist, um die Innereien aus dem Körper zu entfernen.

2. Entweidewerkzeug (10) nach Anspruch 1, **dadurch gekennzeichnet, dass** der Grundkörper (11) im Bereich des Löffelrandes (13) mindestens teilweise aus dem elastischen Material hergestellt ist,

3. Entweidewerkzeug (10) nach Anspruch 1 oder 2, **dadurch gekennzeichnet**, der Löffelrand (13) zwei einander gegenüberliegende Seitenwangen (16, 17) umfasst, wobei die Seitenwangen (16, 17) mindestens teilweise aus dem elastischen Material hergestellt sind.

4. Entweidewerkzeug (10) nach einem oder mehreren der Ansprüche 1 bis 3, **dadurch gekennzeichnet, dass** die Löffelbasis (12) eine Ausnehmung (18) aufweist, wobei im Bereich der Ausnehmung (18) ein Führungsmittel (19) angeordnet ist, das relativ zur Löffelbasis (12) bewegbar dieser zugeordnet ist.

5. Entweidewerkzeug (10) nach einem oder mehreren der Ansprüche 1 bis 4, **dadurch gekennzeichnet, dass** sich an die Löffelbasis (12) ein Löffelhalter (20) anschließt, der zum Befestigen des Grundkörpers (11) an einer Entweideeinrichtung ausgebildet und eingerichtet ist.

6. Entweidewerkzeug (10) nach einem oder mehreren der Ansprüche 1 bis 5, **dadurch gekennzeichnet, dass** der Grundkörper (11) aus mehreren Einzelteilen gebildet ist, wobei die Löffelbasis (12) aus Edelstahl und der Löffelrand (13) mindestens teilweise aus dem elastischen Material hergestellt ist.

7. Entweidewerkzeug (10) nach einem oder mehreren der Ansprüche 1 bis 5, **dadurch gekennzeichnet, dass** der Grundkörper (11) einteilig ausgebildet ist und vollständig aus dem elastischen Material hergestellt ist.

8. Entweidewerkzeug nach Anspruch 7, **dadurch gekennzeichnet, dass** die Löffelbasis (12) eine größere Materialstärke aufweist als der Löffelrand (13).

9. Entweidewerkzeug nach einem oder mehreren der Ansprüche 1 bis 8, **dadurch gekennzeichnet, dass** die Teile des Grundkörpers (11), die aus dem elastischen Material hergestellt sind, aus Polyurethane bestehen.

10. Entweidewerkzeug nach einem oder mehreren der Ansprüche 1 bis 9, **dadurch gekennzeichnet, dass** die Härte des elastischen Materials in einem Bereich von 50 bis 140 Shore und bevorzugt in einem Bereich von 70 bis 100 Shore liegt.

11. Entweidevorrichtung (23), ausgebildet und eingerichtet zum Entfernen von Innereien und insbesondere eines Darmpaketes aus dem Körper von geschlachtetem Geflügel, umfassend eine Aufhängeeinrichtung zum Aufhängen von geköpftem Geflügel an Beinen oder Gelenken sowie mindestens eine Entweideeinrichtung (24), die mindestens ein Entweidewerkzeug (10) trägt, wobei das Entweidewerkzeug (10) aus einer Ausgangsposition außerhalb des Körpers in eine Arbeitsposition innerhalb des Körpers, in der das Entweidewerkzeug (10) die Innereien und insbesondere das Darmpaket an der Brustseite oder der Rückenseite des Körpers umgibt, und zurück bewegbar ausgebildet ist, **dadurch gekennzeichnet, dass** das oder jedes Entweidewerkzeug (10) nach einem oder mehreren der Ansprüche 1 bis 10 ausgebildet ist.

## Claims

1. Evisceration tool (10), designed and configured for removing internal organs and in particular an intestine pack from the body of slaughtered poultry, comprising a spoon-shaped basic body (11), wherein the basic body (11) has a spoon base (12) and a spoon edge (13) which extends around at least part of the spoon base (12) to form a spoon bowl (14), wherein the basic body (11) is made at least partly of a resilient material, **characterized in that** the resilient material is on the one hand flexible enough to adapt to a contour of the body during removal of the internal organs and on the other hand stiff enough to remove the internal organs from the body.

2. Evisceration tool (10) according to claim 1, **characterised in that** the basic body (11) is made at least partly of the resilient material in the region of the spoon edge (13).

3. Evisceration tool (10) according to claim 1 or 2, **characterised in that** the spoon edge (13) comprises two opposing side walls (16, 17), wherein the side walls (16, 17) are made at least partly of the resilient material.

4. Evisceration tool (10) according to one or more of claims 1 to 3, **characterised in that** the spoon base (12) has a recess (18), wherein a guiding means (19) is arranged in the region of the recess (18), which guiding means is associated with the spoon base (12) so as to be movable relative thereto.

5. Evisceration tool (10) according to one or more of claims 1 to 4, **characterised in that** the spoon base (12) is followed by a spoon holder (20) which is designed and configured for fixing the basic body (11) to an evisceration device.

6. Evisceration tool (10) according to one or more of claims 1 to 5, **characterised in that** the basic body (11) is formed of a plurality of individual parts, wherein the spoon base (12) is made of stainless steel and the spoon edge (13) is made at least partly of the resilient material.

7. Evisceration tool (10) according to one or more of claims 1 to 5, **characterised in that** the basic body (11) is in one piece and is made wholly of the resilient material.

8. Evisceration tool according to claim 7, **characterised in that** the spoon base (12) has a greater material thickness than the spoon edge (13).

9. Evisceration tool according to one or more of claims 1 to 8, **characterised in that** the parts of the base body (11) that are made of the resilient material consist of polyurethane.

10. Evisceration tool according to one or more of claims 1 to 9, **characterised in that** the hardness of the resilient material is in a range of from 50 to 140 Shore and preferably in a range of from 70 to 100 Shore.

11. Evisceration apparatus (23), designed and configured for removing internal organs and in particular an intestine pack from the body of slaughtered poultry, comprising a suspension device for suspending decapitated poultry by the legs or joints and at least one evisceration device (24) which carries at least one evisceration tool (10), wherein the evisceration tool (10) is designed to be movable from a starting position outside the body into a working position inside the body in which the evisceration tool (10) surrounds the internal organs and in particular the intestine pack on the breast side or the rear side of the body, and back, **characterised in that** the or each evisceration tool (10) is designed according to one or more of claims 1 to 10.

## Revendications

1. Outil d'éviscération (10), réalisé et mis au point pour enlever les abats et notamment une masse de boyaux de la carcasse d'une volaille abattue, comprenant un corps de base (11) en forme de cuillère, ledit corps de base (11) présentant une base de cuillère (12) et un bord de cuillère (13) faisant au moins partiellement le tour de la base de la cuillère (12), pour former une cuvette de cuillère (14), le corps de base (11) étant au moins partiellement fabriqué en un matériau élastique, **caractérisé en ce que** le matériau élastique est d'une part assez souple pour s'adapter aux contours de la carcasse au moment d'enlever les abats, et d'autre part assez rigide pour enlever les abats du corps.

2. Outil d'éviscération (10) selon la revendication 1, **caractérisé en ce que** le corps de base (11) est fabriqué, dans la zone du bord de la cuillère (13), au moins partiellement dans ledit matériau élastique.

3. Outil d'éviscération (10) selon la revendication 1 ou 2, **caractérisé en ce que** le bord de la cuillère (13) comprend deux joues latérales (16, 17) en face l'une de l'autre, lesdites joues latérales (16, 17) étant fabriquées au moins partiellement dans ledit matériau élastique.

4. Outil d'éviscération (10) selon l'une quelconque ou plusieurs des revendications 1 à 3, **caractérisé en ce que** la base de la cuillère (12) présente un évidement (18), un moyen de guidage (19) qui est associé à la base de la cuillère (12) et mobile par rapport à celle-ci étant agencé dans la zone dudit évidement (18).

5. Outil d'éviscération (10) selon l'une quelconque ou plusieurs des revendications 1 à 4, **caractérisé en ce qu'**un porte-cuillère (20), qui est réalisé et mis au point pour fixer le corps de base (11) à un moyen d'éviscération, se raccorde à la base de la cuillère (12).

6. Outil d'éviscération (10) selon l'une quelconque ou plusieurs des revendications 1 à 5, **caractérisé en ce que** le corps de base (11) est composé de plusieurs pièces individuelles, la base de la cuillère (12) étant fabriquée en acier inoxydable et le bord de la cuillère (13), lui, au moins partiellement dans ledit matériau élastique.

7. Outil d'éviscération (10) selon l'une quelconque ou plusieurs des revendications 1 à 5, **caractérisé en ce que** le corps de base (11) est réalisé d'une seule pièce et est fabriqué intégralement dans ledit matériau élastique.

8. Outil d'éviscération selon la revendication 7, **caractérisé en ce que** la base de la cuillère (12) présente une épaisseur de matériau supérieure à celle du bord de la cuillère (13).

9. Outil d'éviscération selon l'une quelconque ou plusieurs des revendications 1 à 8, **caractérisé en ce que** les pièces du corps de base (11) qui sont fabriquées dans ledit matériau élastique, sont constituées de polyuréthane.

10. Outil d'éviscération selon l'une quelconque ou plusieurs des revendications 1 à 9, **caractérisé en ce que** la dureté dudit matériau élastique se situe dans une marge de 50 à 140 Shore et de préférence dans une marge de 70 à 100 Shore.

11. Dispositif d'éviscération (23), réalisé et mis au point pour enlever des abats et notamment une masse de boyaux de la carcasse d'une volaille abattue, comprenant un moyen de suspente pour suspendre par les cuisses ou les articulations de la volaille étêtée, ainsi qu'au moins un moyen d'éviscération (24) qui porte au moins un outil d'éviscération (10), ledit outil d'éviscération (10) étant réalisé mobile en aller-retour d'une position de départ en dehors de la carcasse, à une position de travail à l'intérieure de la carcasse, position dans laquelle l'outil d'éviscération (10) entoure les abats et notamment la masse de boyaux du côté de la poitrine ou du dos de la carcasse, **caractérisé en ce que** ledit ou chaque outil d'éviscération (10) est réalisé selon l'une quelconque ou plusieurs des revendications 1 à 10.
